# EUROPÄISCHE PATENTSCHRIFT

(11) **EP 0 696 698 B1**
(45) Veröffentlichungstag und Bekanntmachung des Hinweises auf die Patenterteilung: **09.09.1998**
(21) Anmeldenummer: 95110892.7
(22) Anmeldetag: 12.07.1995
(51) Int. Cl.: F16H 59/04, B60K 20/04, F16H 61/24

(54) **Betätigungseinrichtung zum Steuern des Gangwechsels eines Getriebes für ein Kraftfahrzeug**
Actuating device for the speed change control of a vehicle transmission
Dispositif d'actionnement pour la commande de changement de vitesse d'une transmission de véhicule

(30) Priorität: 09.08.1994 DE 4428205
(43) Veröffentlichungstag der Anmeldung: 14.02.1996
(73) Patentinhaber: Bayerische Motoren Werke Aktiengesellschaft, 80788 München (DE)
(72) Erfinder: Sellei, Gustav, D-80804 München (DE); Blechl, Norbert, D-81541 München (DE); Pour, Rahim, Dr., D-85748 Garching (DE); Liebl, Johannes, D-85368 Moosburg (DE)

(56) Entgegenhaltungen:
- DE-C- 117 367
- DE-C- 3 842 818
- FR-A- 994 187
- PATENT ABSTRACTS OF JAPAN vol. 008 no. 072 (P-265) ,4.April 1984 & JP-A-58 217027 (DAIHATSU KOGYO KK) 16.Dezember 1983,
- PATENT ABSTRACTS OF JAPAN vol. 95 no. 001 & JP-A-07 012219 (FUJI KIKO CO LTD) 17.Januar 1995,
- PATENT ABSTRACTS OF JAPAN vol. 016 no. 208 (M-1249) ,18.Mai 1992 & JP-A-04 034262 (KEIHIN SEIMITSU KOUGIYOU KK) 5.Februar 1992,

## Beschreibung

Die Erfindung betrifft eine Betätigungseinrichtung zum Steuern des Gangwechsels eines Getriebes für ein Kraftfahrzeug nach dem Oberbegriff des Hauptanspruchs.

Es ist bereits bekannt, eine Betätigungseinrichtung zum Steuern des Gangwechsels am Kraftfahrzeug räumlich getrennt vom Getriebe anzuordnen. Abhängig von der Ausführung des Kraftfahrzeugs ist dann die Distanz zwischen der Betätigungseinrichtung im Umfeld des Fahrers und dem Getriebe teilweise sehr groß. Lange Schaltzüge oder Schaltstangen, die zur Übertragung der Schaltbewegung von der Betätigungseinrichtung zum Getriebe verwendet werden, sind jedoch die Ursache dafür, daß der Fahrer beim Ausführen einer Schaltbewegung aufgrund der großen Elastizitäten in der Übertragungseinrichtung eine ungenügende haptische Rückmeldung über den Ablauf des Schaltvorgangs bekommt.

Dies trifft insbesondere zu auf Betätigungseinrichtungen, bei denen für maximal je zwei Gänge je eine Schaltstange bzw. ein Schaltzug vorgesehen ist. Eine solche Betätigungseinrichtung beschreibt die DE 30 06 872 A1. Hier wird das unexakte Schaltgefühl für den Fahrer noch dadurch verstärkt, daß für die Bewegung des Schalthebels in der Wählgasse keine Druckpunkte ausgebildet sind, die dem Fahrer durch haptische Rückmeldung das Auswählen der gewünschten Schaltgasse erleichtern. Desweiteren ist von Nachteil, daß sich der Schalthebel in der Wählgasse nicht selbsttätig auf eine bestimmte Neutralposition einstellt.

Eine weitere Betätigungseinrichtung wird durch die französische Patentschrift FR-A 994 187 beschrieben. Hier wird ein Schalthebel offenbart, der mit einem Kugelgelenk gelagert ist, und der eine Einrastungseinrichtung aufweist, während die deutsche Patentschrift DE-C-117 367 das Schalten eines Getriebes über mehrere parallele Ein- und Ausrücker mit einem zweiarmigen Handhebel beschreibt.

Aufgabe der Erfindung ist es, bei einer gattungsgemäßen Betätigungseinrichtung, das Schaltbild um eine Schaltgasse erweitern zu können, ohne eine weitere Schaltstange oder Schaltzug zu verwenden.

Die Aufgabe wird erfindungsgemäß mit den kennzeichnenden Merkmalen des Anspruchs 1 gelöst. Weitere Ausgestaltungen der Erfindung ergeben sich aus den Unteransprüchen.

Nach der Erfindung ist, um das Schaltbild um eine Schaltgasse erweitern zu können, ohne eine weitere Schaltstange oder Schaltzug zu verwenden, vorgesehen, die Schaltbewegung eines weiteren Übertragungselements durch eine Umlenkeinrichtung auf ein Übertragungselement, an dem eine Schaltstange oder Schaltzug befestigt ist, umzulenken. Sehr einfach ist diese Umlenkeinrichtung ausgebildet, wenn sie aus einem drehbar am Gehäuse gelagerten Hebel besteht, der so angebracht ist, daß sich die Bewegungsrichtung der korrespondierenden Übertragungselemente umkehrt.

Dies ist besonders vorteilhaft für eine an sich bereits bekannte Betätigungseinrichtung, bei der der Schalthebel über ein Kugelelement in einem Gehäuse gelagert ist und mit seinem unteren Ende in eine Kulisse von parallel zueinander im Gehäuse verstellbar gelagerten Übertragungselementen hineinragt, an denen jeweils eine Schaltstange bzw. ein Schaltzug befestigt ist. Ebenso vorteilhaft ist dies bei Verwendung weiterer Kurven- und Rastelemente, die als Arretiereinrichtungen für die einzeinen Gänge an den Übertragungselementen angebracht sind.

Eine bevorzugte Ausführung der Erfindung besitzt eine Rückführeinrichtung für den Schalthebel zum Einstellen einer bestimmten Neutralposition und mindestens eine Widerstandseinrichtung zur Beeinflussung der Betätigungskraft beim Wählen der Schaltgassen. Die Verwendung einer Rückführeinrichtung vermeidet Fehlschaltungen aufgrund verschiedener Neutralstellungen des Schalthebels in der Wählgasse.

Eine besonders einfache und kostengünstige Ausführung der Erfindung ergibt sich, wenn die Rückführeinrichtung und die Widerstandseinrichtung durch ein Rastelement und ein Kurvenelement gebildet werden, die durch die Kraft einer vorgespannten Feder aneinander anliegend, gegeneinander verschiebbar gehalten werden und sich selbsttätig in einer Position zueinander festlegen.

Bei einer besonders vorteilhaften Ausführung der Erfindung ist das Rast-bzw. Kurvenelement der Rückführ- und Widerstandseinrichtung am Kugelelement in Verlängerung der Schaltachse angebracht. Das hat den Vorteil, daß die Bewegung des Schalthebels in der Schaltgasse nicht beeinflußt wird. Das korrespondierende Kurven- bzw. Rastelement ist dann einfach gehäusefest so anzuordnen, daß beide aneinander abwälzend oder gleitend zusammenwirken.

Die Ausbildung der Kurvenelemente wird in bevorzugten Ausführungen der Erfindung so gewählt, daß für die Arretiereinrichtungen in den Schaltgassen eine für jede Endstellung des Schalthebels gleiche haptische Rastrückmeldung entsteht. Bei der Widerstandseinrichtung für die haptische Rückmeldung in der Wählgasse ist von Vorteil, wenn verschiedenartige haptische Rückmeldungen am Schalthebel entstehen, je nachdem, ob die Schaltgasse für den Rückwärtsgang oder verschiedene Vorwärtsgänge gewählt wird. Die Vertiefung des Kurvenelements ist eine vorteilhaft einfache Möglichkeit zur Festlegung der Neutralposition der Rückführeinrichtung.

Das Aufbringen der Vorspannung zwischen Rast- und Kurvenelementen ist in einer weiteren vorteilhaften Ausführung der Erfindung besonders einfach durch die Verwendung von Blatt- oder Spiralfedern möglich.

Ein bevorzugtes Ausführungsbeispiel der Erfindung ist in der nachfolgenden Beschreibung und der zugehörigen Zeichnung näher dargestellt. Es zeigen:
- Figur 1: einen Längsschnitt durch die Betätigungseinrichtung, wobei die Schaltbewegung des Schalthebels durch mehrfache Darstellung angedeutet ist,
- Figur 2: einen Querschnitt entlang der Linie B-B durch die Betätigungseinrichtung, wobei die Wählbewegung des Schalthebels durch die Darstellung verschiedener Wählstellungen dargestellt ist,
- Figur 3: ein mit dieser Betätigungseinrichtung erzieltes Schaltbild des Schalthebels.

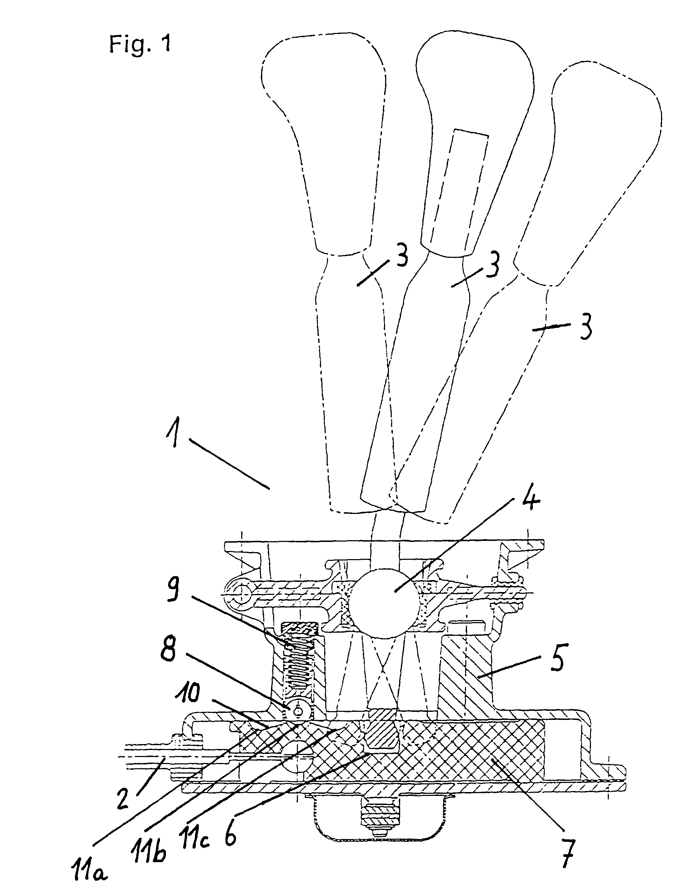

Figur 1 zeigt eine Betätigungseinrichtung 1 zum Steuern des Gangwechsels eines Getriebes eines Kraftfahrzeugs, bei dem Betätigungseinrichtung 1 und Getriebe räumlich getrennt sind. Das nicht gezeichnete Getriebe ist mit der Betätigungseinrichtung 1 über Schaltzüge 2 verbunden, die die Schaltbewegungen des Fahrers an einem Schalthebel 3 zum Getriebe übertragen. Der Schalthebel 3 ist in dieser Darstellung zur besseren Verdeutlichung in allen drei Schaltpositionen einer Schaltgasse gezeichnet. In der mittleren Stellung befindet er sich in seiner Neutralposition in der Wählgasse des Getriebes. Die beiden strichpunktiert gezeichneten Endstellungen deuten seine Lage an, wenn der jeweilige Gang der Schaltgasse eingelegt ist.

Der Schalthebel 3 ist über ein Kugelelement 4 in einem Gehäuse 5 beweglich gelagert. Mit seinem unteren Ende ragt er in eine Kulisse 6 von parallel zueinander im Gehäuse 5 verschiebbar gelagerten Übertragungselementen 7. Jedes Übertragungselement 7 überträgt die Schaltbewegung des Schalthebels 3 einer Schaltgasse auf den Schaltzug 2, der am Übertragungselement 7 festgelegt ist. Es ist also für maximal je zwei Gänge je ein Schaltzug 2 mit Übertragungselement 7 vorgesehen.

Zur Sicherung der Verstellpositionen des Schalthebels 3 in den Schaltgassen ist an jedem Übertragungselement 7 eine Arretiereinrichtung vorgesehen. Diese vermittelt dem Fahrer bei der Schaltbewegung für alle drei Schaltstellungen (Neutralstellung, sowie beide eingelegte Gänge der Schaltgasse) eine haptische Rückmeldung des Schaltvorgangs. Desweiteren werden die Schaltpositionen des Schalthebels 3 eindeutig festgelegt.

Die Arretiereinrichtung besteht aus einem als Kugel 8 ausgebildeten weiteren Rastelement, das unter dem Druck einer gehäusefest vorgespannt gelagerten Spiralfeder 9 an der als weiteres Kurvenelement ausgebildeten Oberfläche 10 des Übertragungselements 7 abwälzt. Diese ist symmetrisch, höckerartig, mit drei Vertiefungen 11 ausgebildet. Befindet sich die Kugel 8 wie dargestellt in der mittleren Vertiefung 11b, so wird durch die Arretiereinrichtung die Neutralposition des Schalthebels 3 in der Wählgasse gesichert. Die beiden anderen Vertiefungen 11a, 11c in der Oberfläche 10 des Übertragungselements 7 sichern zusammen mit der eingerasteten Kugel 8 den jeweils eingelegten Gang einer Schaltgasse.

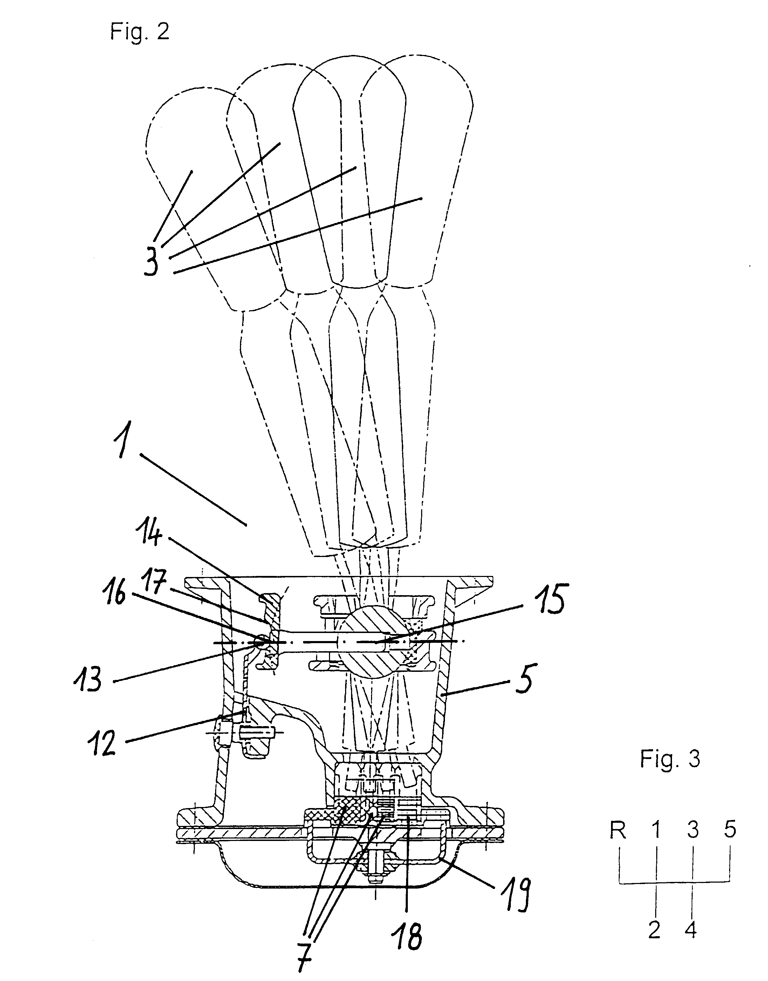

In Figur 2 sind alle Wählstellungen des Schalthebels 3 in der Wählgasse gezeichnet. Die strichpunktiert gezeichneten Stellungen des Schalthebels 3 sind von links nach rechts die Stellung der Schaltgasse für den Rückwärts-, den ersten bzw. zweiten und den fünften Gang. Die nicht strichpunktiert dargestellte Stellung des Schalthebels 3 ist die Stellung seiner sich selbst einstellenden Neutralposition, wenn er in der Wählgasse losgelassen wird. Diese Neutralposition entspricht der Schaltgasse des dritten bzw. vierten Ganges.

Sie stellt sich aufgrund einer im Gehäuse 5 der Betätigungseinrichtung 1 untergebrachten Rückführeinrichtung ein, die aus einem über eine Blattfeder 12 gehäuesefest gelagerten Rastelement 13 besteht, das mit einem Kurvenelement 14 abwälzend zusammenwirkt. Das Kurvenelement 14 ist am Kugelelement 4 in Verlängerung der Schaltachse 15 angebracht, damit eine Schaltbewegung des Schalthebels 3 keine Veränderung der Vorspannung der Blattfeder 12 verursacht. Der Schalthebel 3 wird durch das selbsttätige Verschieben des vorgespannten Rastelements 13 in eine Vertiefung 16 im Kurvenelement 14 in seiner Neutralstellung in der Schaltgasse des dritten und vierten Ganges positioniert. Schwenkt der Fahrer den Schalthebel 3 aus dieser Wählposition in die einer anderen Schaltgasse, so wird das Kurvenelement 14 mit seinen unregelmäßig, unsymmetrisch ansteigenden Flanken 17 am Rastelement 13 gleitend verschoben. Dabei bewirken die Flanken 17, daß für jede zu wählende Schaltgasse eine unterschiedliche Wählkraft aufzubringen ist.

So bildet das Kurvenelement 14 mit dem Rastelement 13 auch eine Widerstandseinrichtung zur Beeinflussung der Betätigungskraft beim Wählen der Schaltgassen. Dies vermittelt dem Fahrer eine zuverlässige haptische Rückmeldung über die gewählte Schaltgasse und verhindert dadurch, daß dieser aus Versehen zum Beispiel den Rückwärtsgang einlegt, wenn Vortwärtsfahrt gewünscht ist.

Zu den Rastelementen 8, 13 und den Kurvenelementen 10, 14, die durch die Federn 9, 12 unter Vorspannung abwälzend oder gleitend zusammenwirken, soll noch angemerkt werden, daß deren Positionen jeweils vertauscht werden können. Werden die Rastelemente 8, 13 gehäusefest angebracht, so müssen die Kurvenelemente 10, 14 am Übertragungselement 7 bzw. Kugelelement 4 ausgebildet sein und umgekehrt. Die Ausbildung der Federn als Spiralfeder 9 oder Blattfeder 12 ist auch variabel.

Ebenso die Lagerung der Federn 9, 12 am Gehäuse 5 oder am Übertragungselement 7 bzw. Kugelelement 4.

Um mit drei Schaltzügen 2 ein Schaltbild zu verwirklichen, wie es in Figur 3 selbsterklärend dargestellt ist, wird ein weiteres Übertragungselement 18 verwendet, an dem kein Schaltzug angebracht ist. Seine Längsbewegung wird durch eine Umlenkeinrichtung, die aus einem drehbar am Gehäuse 5 gelagerten Hebel 19 besteht, in eine Längsbewegung eines der Übertragungselemente 7 umgewandelt, das mit einem Schaltzug 2 verbunden ist. Dabei sind die Bewegungsrichtungen des weiteren Übertragungselementes 18 und des Übertragungselementes 7, die über den Hebel 19 zusammenwirken, entgegengesetzt.

## Patentansprüche

1. Betätigungseinrichtung (1) zum Steuern des Gangwechsels eines Getriebes eines Kraftfahrzeuges, bei dem Betätigungseinrichtung (1) und Getriebe räumlich getrennt sind und die Schaltbewegungen des Fahrers an der Betätigungseinrichtung (1) über Schaltstangen bzw. Schaltzüge (2) zum Getriebe übertragen werden, wobei für maximal je zwei Gänge je eine Schaltstange bzw. ein Schaltzug (2) vorgesehen ist, mit einem Schalthebel (3) zum Auswählen der Schaltgassen und Schalten der Gänge, der, in einem Gehäuse (5) gelagert, mit seinem unteren Ende in eine Kulisse (6) von parallel zueinander im Gehäuse (5) verstellbar gelagerten Übertragungselementen (7) hineinragt, an denen jeweils eine Schaltstange bzw. ein Schaltzug (2) befestigt ist, und mit einer Arretiereinrichtung zur Sicherung der Verstellpositionen des Schalthebels (3) in den Schaltgassen, wozu an der Oberfläche jedes Übertragungselementes (7) ein weiteres Kurvenelement (10) bzw. ein weiteres Rastelement (8) ausgebildet ist, das jeweils mit einem gehäusefesten weiteren Rast- bzw. Kurvenelement (8, 10) durch jeweils eine weitere Feder (9) aneinander anliegend vorgespannt ist und wozu das weitere Rastelement (8) mit dem weiteren Kurvenelement (10) aneinander abwälzend oder gleitend zusammenwirkt, dadurch gekennzeichnet, daß im Gehäuse (5) eine Umlenkeinrichtung angebracht ist, die die Bewegung eines weiteren Übertragungselements (18), an dem keine Schaltstange oder kein Schaltzug befestigt ist, auf ein Übertragungselement (7) überträgt, an dem eine Schaltstange oder ein Schaltzug (2) angebracht ist.

2. Betätigungseinrichtung (1) nach Anspruch 1, dadurch gekennzeichnet, daß sie eine Rückführeinrichtung für den Schalthebel (3) zum Einstellen einer bestimmten Neutralposition und mindestens eine Widerstandseinrichtung zur Beeinflussung der Betätigungskraft beim Wählen der Schaltgassen besitzt, die beide aus einem Rastelement (13) und einem Kurvenelement (14) bestehen, die durch die Kraft einer vorgespannten Feder (12) aneinander anliegend, gegeneinander verschiebbar gehalten werden und sich selbsttätig in einer Position zueinander festlegen.

3. Betätigungseinrichtung (1) nach Anspruch 2, dadurch gekennzeichnet, daß das Rastelement (13) bzw. das Kurvenelement (14) am Kugelelement (4) in Verlängerung der Schaltachse (15) so angebracht ist, daß es mit dem dazugehörigen Kurvenelement (14) bzw. Rastelement (13) abwälzend oder gleitend zusammenwirkt und dieses gehäusefest ausgebildet ist.

4. Betätigungseinrichtung (1) nach einem der Ansprüche 1 bis 3, dadurch gekennzeichnet, daß die Oberfläche (10) des weiteren Kurvenelementes symmetrisch, höckerartig, mit drei dazwischenliegenden Vertiefungen (11) ausgebildet ist.

5. Betätigungseinrichtung (1) nach einem der Ansprüche 1 bis 4, dadurch gekennzeichnet, daß die Oberfläche des Kurvenelementes (14) als eine Vertiefung (16) mit unregelmäßig, unsymmetrisch ansteigenden Flanken (17) mit Endanschlägen ausgebildet ist.

6. Betätigungseinrichtung (1) nach einem der Ansprüche 1 bis 5, dadurch gekennzeichnet, daß die Feder und die weitere Feder jeweils eine Blatt- (12) oder Spiralfeder (9) ist, die sich mit einem Ende am Gehäuse (5) oder am Kugelelement (4) und deren anderes Ende das Rastelement (8, 13) abstützt.

## Claims

1. An actuator (1) for controlling the change of gears in a gear unit of a motor vehicle, wherein the actuator (1) is spatially separate from the gear unit and the gear-shifting motions of the driver are transmitted to the actuator (1) via gear-shift bars or cables (2) to the gear unit, each gear-shift bar or cable (2) being provided for not more than two gears, the device comprising a shift lever (3) for selecting the gear-shift lanes and shifting the gears and mounted in a casing (5) and its lower end projecting into a link (6) connecting a number of transmission elements (7) mounted for adjustment parallel to one another in the casing (5), a gear-shift bar or cable (2) being secured to each transmission element, also comprising a locking device for securing the position in which the shift lever (3) is set in the lanes, to which end an additional cam element (10) or an additional catch element (8) is formed on the surface of each transmission element (7) and is prestressed by a respective additional spring (9) against an additional catch or cam element (8, 10) secured to the casing, and the additional catch element (8) co-operates with the additional cam element (10) by rolling or sliding on it, characterised in that a guide device is disposed in the casing (5) and transmits the motion of an additional transmission element (18), not fastened to a gear-shift bar or cable, to a transmission element (7) to which a gear-shift bar or cable (2) is attached.

2. An actuator (1) according to claim 1, characterised in that it comprises a return device for the shift lever (3) for engaging in a given neutral position and at least one resistance device for influencing the actuating force when selecting the gear-shift lanes, each device comprising a catch element (13) and a cam element (14) which are held by the force of a prestressed spring (12) against one another and movable relative to one another and are automatically fastened in a position relative to one another.

3. An actuator (1) according to claim 2, characterised in that the catch element (13) or the cam element (14) is so disposed on the ball element (4) in the prolongation of the gear-shifting axis (15) that it co-operates with the associated cam element (14) or catch element (13) by sliding or rolling on it and the latter element is secured to the casing.

4. An actuator (1) according to any of claims 1 to 3, characterised in that the surface (10) of the additional cam element is symmetrical, humped and with three intermediate recesses (11).

5. An actuator (1) according to any of claims 1 to 4, characterised in that the surface of the cam element (14) is in the form of a recess (16) with irregular asymmetrically rising flanks (17) with end abutments.

6. An actuator (1) according to any of claims 1 to 5, characterised in that the spring and the additional spring respectively are a leaf spring (12) or helical spring (9), one end of which bears on the casing (5) or the ball element (4) and the other end bears on the catch element (8, 13).

## Revendications

1. Dispositif d'actionnement (1) pour commander le changement de vitesse d'une transmission de véhicule automobile selon lequel
le dispositif d'actionnement (1) et la transmission sont séparés dans l'espace et les mouvements de commutation du conducteur vers le dispositif d'actionnement (1) en passant par des tiges de commutation ou des tringles de commutation (2) sont transmis à la boîte de vitesses et pour au plus chaque fois deux vitesses, il est prévu respectivement une tige de commutation ou une tringlerie de commutation (2), avec un levier de commutation (3) pour sélectionner les voies de commutation et les commutations des rapports, montées dans un boîtier (5) avec à son extrémité inférieure, dans une coulisse (6), deux éléments de transmission (7) montés réglables parallèlement entre eux dans le boîtier (5), et à chacun d'eux est fixée chaque fois une tige de commutation ou une tringle de commutation (2) et une installation de fixation pour bloquer les positions de réglage du levier de vitesse (3) dans les chemins de la grille, et pour cela à la surface de chaque élément de transmission, il est prévu un autre élément de courbe (10) ou un autre élément d'encliquetage (8) contraint chaque fois par un élément d'encliquetage ou de courbe (8, 10) solidaire du boîtier pour être appliqués chaque fois l'un contre l'autre de manière précontrainte par un autre ressort (9) et l'autre élément d'encliquetage (8) coopère en roulement ou en glissement avec l'autre élément de courbe (10,)
caractérisé en ce que
dans le boîtier (5) est logée une installation de renvoi qui transmet le mouvement d'un autre élément de transmission (18) auquel ne sont fixées aucune tringle, ni tige de commutation, vers un élément de transmission (7) muni d'une tige de commutation ou d'une tringle de commutation (2).

2. Dispositif selon la revendication 1,
caractérisé en ce qu'
il comporte une installation de rappel du levier de changement de vitesse (3) pour régler une certaine position neutre et au moins une installation à résistance mécanique pour influencer la force d'actionnement à section des chemins de la grille de la boîte de vitesses, se composant d'un élément d'encliquetage (13) et d'un élément de courbe de guidage (14) appliqués l'un contre l'autre par la force d'un ressort précontraint (12), tout en étant montés coulissants et se fixant automatiquement dans une position l'un par rapport à l'autre.

3. Dispositif d'actionnement (1) selon la revendication 2,
caractérisé en ce que
l'élément d'encliquetage (13) ou l'élément de courbe (14) sont prévus sur l'élément de bille (4) dans le prolongement de l'axe de commutation (15) pour rouler avec l'élément de courbe correspondant (14) ou l'élément d'encliquetage (13) ou coopérant en glissement et cet élément est réalisé solidaire du boîtier.

4. Dispositif d'actionnement selon l'une des revendications 1 à 3,
caractérisé en ce que
la surface (10) de l'autre élément de courbe est symétrique en forme de sellette avec trois cavités intermédiaires (11).

5. Dispositif d'actionnement selon l'une des revendications 1 à 4,
caractérisé en ce que
la face supérieure de l'élément de courbe (14) est réalisée sous la forme d'une cavité (16) avec des flancs (17) irréguliers croissants de manière non symétrique et ayant des butées de fin de course.

6. Dispositif d'actionnement selon l'une des revendications 1 à 5,
caractérisé en ce que
le ressort et les autres ressorts sont chaque fois un ressort-lame (12) ou un ressort hélicoïdal (9) qui s'appuie par une extrémité contre le boîtier (5) ou l'élément de rotule (4) et par l'autre extrémité, l'élément d'encliquetage (8, 13).
